Europäisches Patentamt

European Patent Office

Office européen des brevets

(11) Publication number: **0 500 191 A1**

# EUROPEAN PATENT APPLICATION

(21) Application number: **92200814.9**

(22) Date of filing: **25.01.89**

(51) Int. Cl.5: **B23H 1/00**, B25H 1/04, G02B 21/34

This application was filed on 20 - 03 - 1992 as a divisional application to the application mentioned under INID code 60.

(30) Priority: **27.01.88 US 148870**
**02.08.88 US 227131**

(43) Date of publication of application:
**26.08.92 Bulletin 92/35**

(60) Publication number of the earlier application in accordance with Art.76 EPC: **0 326 349**

(84) Designated Contracting States:
**DE FR GB IT**

(71) Applicant: **HYCOR BIOMEDICAL**
**11040 Condor Avenue**
**Fountain Valley, California 92708(US)**

(72) Inventor: **Mitchell, Vance Charles**
**6 Hillgrass**
**Irvine, California 92715(US)**

(74) Representative: **Hallybone, Huw George et al**
**CARPMAELS AND RANSFORD 43**
**Bloomsbury Square**
**London WC1A 2RA(GB)**

(54) **Patterned plastic optical components.**

(57) A method of forming an eroded pattern on a metal part using electrical discharge machining (EDM) comprising: forming a pattern of electrodes on the end of a piece of electrode material by using wire EDM, the pattern of electrodes being the pattern to be eroded on the metal part or being a portion of the pattern; and mounting the metal part for EDM with the pattern of electrodes being mounted for use as electrodes and the erosion of the pattern or portion of the pattern provided by the pattern of electrodes by EDM in the metal part. The method is useful to produce patterned optical components, e.g. microscopic slides with reticles. For this purpose, the metal part with the eroded pattern on it is used as a mold.

FIG 5

## FIELD OF THE INVENTION

This invention relates to plastic optical components having a finely lined pattern on a viewing surface. More specifically, the invention relates to transparent plastic slides having a finely lined pattern to facilitate examination under magnification of a specimen overlying said pattern and to methods and mold inserts for the production of such slides and other pattern bearing optical components.

## BACKGROUND OF THE INVENTION

Biological fluids, such as blood, spinal fluid, cell cultures and urine, are frequently examined microscopically to determine the presence or concentration of suspended particulate matter. For many years, a drop of the liquid specimen was first placed on a flat transparent microscope slide. A thin flat transparent cover slip was then placed over the specimen. More recently unitary plastic slides as shown in U.S. patent 4,637,693 have become available. Such unitary slides include at least one examination chamber formed between integral base and cover plates. A liquid specimen is drawn by capillation into the chamber from a drop placed adjacent thereto.

To accurately determine the concentration of suspended particles or cells in a liquid specimen, several parameters must be either measured or maintained at constant values. These parameters include the interior dimensions which determine the volume of the examination chamber and the volume of fluid from which the sample is taken. In urinalysis procedures the sample is taken at a standard volume of 12 ml. The 12 ml. sample is centrifuged and 11 ml. are decanted. The sediment is resuspended in the remaining 1 ml. to provide a 12 to 1 concentration of the particulate. This procedure is facilitated by use of the pipette described in Mitchell U.S. patent 4,563,332.

Unitary plastic slides as described in U.S. patent 4,637,693 have examination chamber roofs spaced a predetermined distance from the chamber floors. With such slides the only remaining dimension required to determine the volume of specimen liquid under examination is the lateral dimension of the field of view of the examining instrument, e.g., a microscope. This lateral dimension varies depending on magnification and the optics used in the instrument. Therefore, standardization requires either that all microscopes or the like have the same field of view or that the differences in fields of view must be calculated and factored into the various counts of suspended particulate matter.

Pursuant to this invention a grid system is defined on the floor of a slide examination chamber, thus eliminating the need to consider the lateral extent of the field of view of the examining instrument. Such a grid system may be provided on the examination chamber floor of a slide which is utilized with a separate cover slip or of unitary slide having a permanently affixed cover plate as shown for example in U.S. Patent 4,637,693.

Such slides are made of transparent optical quality plastic. The grid must either be machined or scribed onto the chamber floor after the slide is molded or formed from a pattern incorporated into the mold. This invention provides molds and molding procedures useful to incorporate a grid pattern into an examination chamber floor during the molding process.

Many applications, e.g., urinalysis procedures, require magnification of the order of 400 times. At this magnification the diameter of the fields of view vary from about 0.33 millimeters (mm) to 0.50 mm. Grid systems with narrow defining lines, e.g., 0.025 mm in width, separated by less than half a millimeter are required. Otherwise, portions of the grid perimeter will extend beyond the field of view requiring adjustments to the microscope or other magnification instrument, thus effectively defeating the purpose of the grid.

Pursuant to this invention fine patterns such as grids are provided on plastic optical components, specifically urinalysis slides, for use at magnification of from about 10x to about 1500x. A magnification range of from about 350x to about 450x is appropriate for most purposes. Pattern line widths of from about .005 to about .05 mm and pattern line spacings of from about .06 mm to about 9 mm accommodate such magnification ranges.

## DESIGN AND PRODUCTION OF MOLD INSERTS

Prior to this invention efforts to provide fine line widths on metal mold parts for use in the production of plastic optical components such as urinalysis slides have not been successful. For example, minimum line widths of only about 0.076 to 0.13 mm have been achieved using milling or grinding machine techniques.

Pursuant to this invention electrical discharge machining techniques provide marking for a grid system on metal mold inserts useful to make the examination chamber floor surfaces on plastic slide bases and other kinds of plastic optical components. Such plastic slide bases normally have multiple examination chamber floor surfaces. Each floor surface must have an optical quality finish. Hence, the portions of the molds, i.e., the "mold inserts", on which examination floor surfaces are formed must also have an optical quality finish. Conventionally, stainless steel, free of pits and voids, polished to an optical quality or mirror finish is employed. To provide a grid system on examination floor surfaces material must he removed or added to the polished mold surface in an appropriate pattern of lines.

One aspect of this invention provides an electrical discharge machining method for precisely removing material from polished metal mold face surfaces to provide fine line patterns, e.g., patterns with line widths of about 0.012 to about 0.023 mm.

The electrical discharge machining method entails submerging a grounded metal mold insert in a non-conductive fluid adjacent an electrode conforming to a pattern to be eroded into the mold insert. When the electrical potential between the grounded mold insert and electrode reaches the break down potential, an arc is formed with erodes both the surface of the mold insert to be machined and that of the electrode. The depth of the mold insert erosion is a function of the spacing between the insert surface and the electrode and of the applied electrical potential. The width of the lines eroded into the mold surface depends on the width of the corresponding electrode elements and the potential between the mold insert and the electrode. For example, using standard electrical discharge machining equipment with an electrode 0.013 mm thick results in eroded lines having widths between 0.025 to 0.036 mm on the mold insert face.

Thin electrodes are essential to provide the requisite narrow eroded line widths on the mold insert. Such electrodes, as an incident of arcing or for other reasons, may bend thus producing unacceptable wavy lines. Accordingly, one aspect of the invention comprises a set of parallel electrodes which do not bend and which can be used to simultaneously erode a parallel set of lines for a grid system. Rotation of ninety degrees between a mold insert and the electrode permits erosion of a second set of grid system lines.

Tungsten is the electrode material of choice because of its very high melting point, high conductivity and relatively high strength as compared to copper or silver. However, tungsten is not practically available in a form from which electrodes can be made efficiently due, inter alia, to difficulties in machining. For this practical reason, electrodes for use in the invention are preferably formed from sintered copper-tungsten matrix containing about 30% copper.

A block of tungsten or of sintered copper-tungsten matrix is machined to provide a raised platform with a flat top. With the tungsten or sintered copper-tungsten matrix arranged as the grounded work piece, a commercially available electrical discharge machine may be used. Such machines pass a single wire electrode continuously between two spindles operated by independent microprocessors controlled servomotors. In repeated passages the wire electrode erodes material from the raised platform to form parallel raised electrodes on the block. In this way, each block electrode can, for example, be made 0.013 mm wide and 0.051 mm high and be spaced 0.33 mm from an adjacent block electrode so that a pattern of 0.33 mm square markings can be provided to define the grid system on a mold insert.

## BRIEF DESCRIPTION OF THE DRAWINGS

Figure 1 is an exploded view of a plastic slide base and cover which, when assembled, has ten examination chambers.

Figure 2 is a top plan view of an assembled unitary slide with a grid system formed by use of mold inserts eroded by the method of the invention.

Figure 3 is a top plan view of one kind of a grid system which can be formed on slides as shown in Figure 2.

Figure 4 is a perspective view of an electrode assembly block from which electrodes of the invention are made.

Figure 5 is a perspective view of an optical quality mold insert on which a grid system of the invention has been eroded.

Figure 6 is a perspective view of the raised platform on the electrode assembly block shown in Figure 4 showing formed electrodes.

Corresponding components are designated by the same reference numerals throughout the various figures.

## DETAILED DESCRIPTION OF THE INVENTION

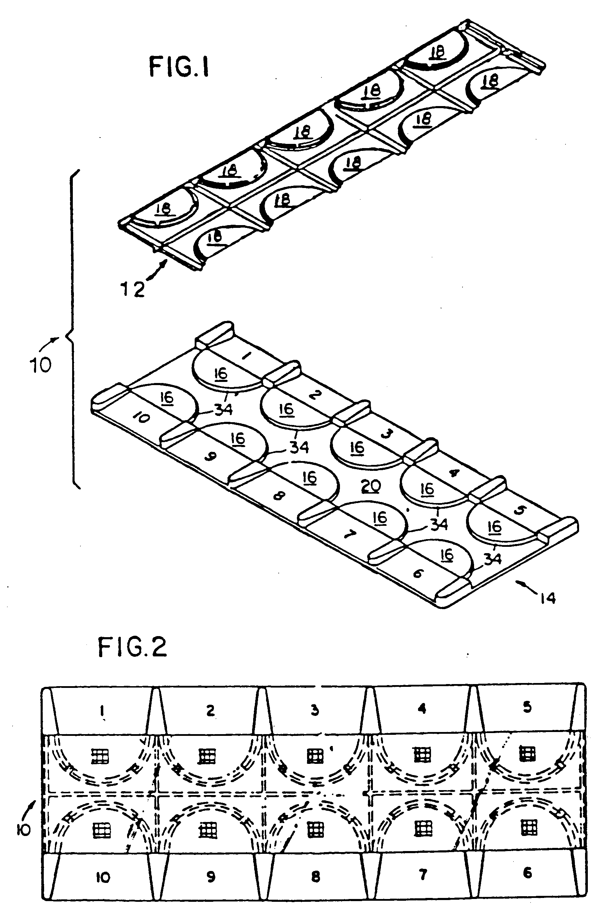

An exploded perspective view of a slide on which a grid can be formed using the method of the present invention is illustrated in Figure 1 where the slide is generally designated by reference numeral 10. The slide 10 includes a plastic cover plate 12 and a plastic base plate 14. A top plan view of an assembled slide 10 is shown in figure 2. One form of this unitary type of slide is described in patent 4,637,693.

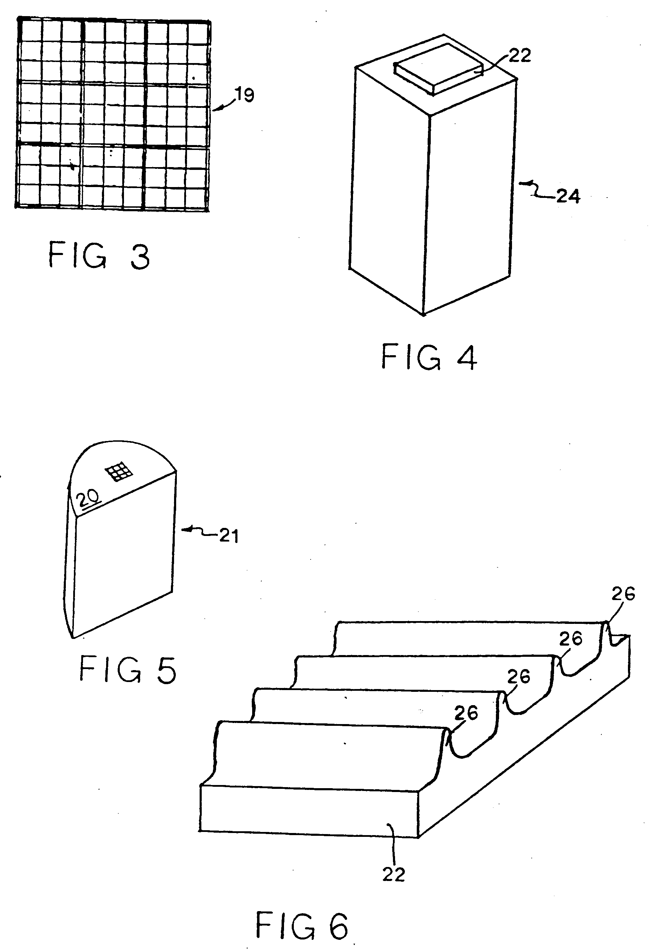

The plastic base plate 14 for the slide 10 includes flat, optically smooth examination chamber floor surfaces 16. The plastic cover plate 12 has examination chamber roof surfaces 18, which like the examination chamber floor surfaces 16, are flat and optically smooth. The mold inserts used to form the examination chamber roof surfaces 18 and floor surfaces 16 are preferably made of optical quality stainless steel or other metal and polished to mirror finishes. The desired grid pattern is provided by erosion of the polished mirror surfaces 20 (see Figure 5) of the mold inserts 21 used to form the examination chamber floor surfaces 16. The erosion is accomplished by electrical discharge machining. An electrode to erode straight lines which are narrow and not excessively deep is used. Control of the depth of erosion is accomplished by adjustment of the applied voltage and current and of the distance maintained between the electrode and the polished surfaces 20. The width of the line is dependent on the applied voltage and current and also on the width of the electrode.

As the electrode is narrowed, its strength and resistance to bending are reduced. Accordingly, electrodes for use in this invention are made from a strong, high melting point, electrically conductive material.

As shown in Figure 4, an electrode assembly, generally designated as 24 is machined using known machine shop equipment such as grinders to provide at one end a raised pedestal 22 with a smooth flat surface on which a pattern of electrodes 26 is formed by wire electrical discharge machining. See Figure 6. To form the electrodes 26, the electrode assembly 24 is immersed in deionized water and an electrical potential of 40 volts with a current of 0.4 amperes is supplied between a wire running parallel to the electrodes 26 to be formed on the surface of the electrode assembly 24.

The dimensions of the electrodes are chosen to provide pattern lines of desired dimension. For example, electrodes 0.013 mm wide by 0.051 mm high and approximately 1 mm long spaced 0.33 mm apart may be used to provide mold insert grid patterns appropriate for urinalysis slides.

An electrode assembly 24 may be used to produce all of the lines in the grid pattern shown in Figure 3 except the double paired lines. The double paired lines may, for example, be spaced 0.038 mm apart. Electrodes 26 cannot be formed on one electrode assembly 24 at such a narrow spacing because the wire electrical discharge machining uses a 0.102 mm diameter wire with a 0.025 mm spark gap around the wire which mandates a minimum spacing between electrodes 26 of 0.152 mm. To make the double paired lines, a second electrode assembly 24 is made with electrodes 26 for only the second line of each pair. The width, height and length of each electrode 26 on the second electrode assembly 24 may be the same as those of the electrodes 26 on the first electrode assembly 24.

Either electrode assembly 24 may be first used to form the grid pattern on the polished metal surface 20 of a mold insert 21. The mold insert bearing a polished metal surface 20 is mounted as the grounded part in a bath of non-conductive, high flash point oil. One of the electrode assemblies 24 is mounted above the mold insert to be lowered to the correct location to erode the desired pattern of lines on the polished metal surface 20. To erode the pattern of lines, a 50 volt and 0.2 ampere electrical signal is typically applied between the grounded polished metal surface 20 and the electrode assembly 24. This system permits erosion of lines 0.012 to 0.023 mm wide and 0.008 mm deep. Lines of different dimensions are similarly provided by appropriately dimensioned electrode assemblies.

The copper tungsten sintered material preferred in present practice for electrode conduction is formed by compressing fine particles of copper and tungsten at high pressure. The copper particles are quite visible at 30X magnification. It appears that the copper is melted out during the machining process with the consequent production of a substantial number of voids in the desired pattern lines. Missing or jagged spots appear along the top of each electrode "tooth". Such spots are generally from about 0.013 mm to 0.051 mm in width. The number of such voids vary because the copper-tungsten mixture is not homogeneous.

To eliminate such interruptions and gaps, the electrode assembly 24, after eroding a set of parallel lines, is slightly shifted laterally by, e.g., 0.1 mm with respect to the grounded polished metal surface 20 and again applied to erode the same lines. After the second use of the electrode assembly 24, the electrode assembly 24 is rotated ninety degrees with respect to the eroded parallel lines and a second set of perpendicular lines is eroded. This second set of lines is also eroded twice to assure elimination of interruption and gaps.

At this point, the electrode assembly 24 is changed and a second electrode assembly (not shown) is used for the final erosion of lines on the polished metal surface 20 following the same steps as were used with the first electrode assembly 24.

Upon completion of erosion of grid patterns on polished metal surfaces 20 for the necessary number of mold inserts 21 for a mold to make slide bases, the mold can be assembled and slides made using optical quality clear plastic. The resulting grid patterns on examination chamber floor surfaces 16 may have lines as narrow as 0.012 mm or about 15 microns wide. Such lines are distinct but not over-proportioned in comparison to, for example, red blood cells which are 5-10 microns in diameter. The height of the lines may only be only 0.008 mm to avoid the problem of particulate matter such as cells being strained out by the grid pattern when the liquid specimen is drawn into an examination chamber.

The quality of the edges of the lines is another benefit. The edges of the lines of the grid pattern 19 made on the examination chamber floor surfaces 16 by the method of the present invention are sharp and distinct. These qualities aid in identification of objects on and adjacent the lines. In combination, the width, height and distinct edges of the lines sets out areas where, after a liquid specimen is injected in an examination chamber, particulate matter can settle so accurate count can be made. That particulate matter settling about a line will settle on one side or the other with a 50-50 probability because of the symmetric shape of the lines.

Although the invention has been specifically illustrated by an embodiment, various modifications and additions are encompassed by the invention as set out in the claims. For example, electrode assemblies can be made to erode patterns of lines on mold parts for making all types of optical components such as reticles and diffraction patterns. Essentially, any finely lined pattern that needs to be made can be by the process of the present invention.

## Claims

1. A method of forming an eroded pattern on a metal part using electrical discharge machining (EDM) comprising:

   forming a pattern of electrodes on the end of a piece of electrode material by using wire EDM, said pattern of electrodes being the pattern to be eroded on said metal part or being a portion of said pattern; and

   mounting said metal part for EDM with said pattern of electrodes being mounted for use as electrodes and the erosion of said pattern or portion of said pattern provided by said pattern of electrodes by EDM in said metal part.

2. A method of forming molded components having a pattern of lines eroded in the mold to cause the pattern to be formed as raised lines on molded components, comprising:

   forming a pattern of electrodes on the end of a piece of electrode material by using wire electrical discharge machining (EDM), said pattern of electrodes being the pattern to be eroded in said mold or being a portion of said pattern;

   mounting said mold for EDM with said pattern of electrodes being mounted for use as electrodes and the erosion of said pattern or portion of said patterns provided by said pattern of electrodes by EDM in said mold; and

molding of said components using said mold with said pattern of lines eroded in said mold.

3. The method of Claim 2 wherein sintered copper-tungsten matrix is used as the electrode material.

4. The method of Claim 2 wherein the portion of the mold in which the pattern is eroded is made of optical quality stainless steel.

5. The method of Claim 2 wherein the pattern of lines eroded into the mold is a grid with square sections 0.33 mm on a side and the lines are 0.012 to 0.023 mm wide and 0.008 mm deep.

6. A method for producing a mold useful to manufacture a transparent plastic optical component having an optically smooth surface bearing a finely lined pattern to facilitate the examination of objects under magnification of from about 10 times to about 1500 times,

   the perimeter of said pattern being so dimensioned that it does not, at the magnification selected, extend beyond the field of view of the magnification instrument utilized,

   which method comprises:

   subjecting a blank metallic mold insert to a first electrical discharge machining step with an assembly of substantially parallel electrodes of length, width and height appropriate to erode into the surface of said mold grooves of a size to provide said grid forming ridges on said slide,

   effecting a 90° rotation between said mold and electrode assembly and thereafter subjecting said mold to a second electrical discharge machining step.

7. A method as defined by Claim 6 in which said first electrical discharge machining step is carried out in two stages, the second stage being accomplished with the relative position of the mold and electrodes being shifted laterally upon completion of the first stage.

8. A method for producing a mold as defined by Claim 6 in which each of the first and second electrical discharge machining steps are carried out in two stages, the second stage of each such step being accomplished with the relative position of the mold and electrodes being shifted slightly laterally upon completion of the first stage.

9. A molded plastic optical component having a finely lined pattern on a viewing surface thereof, said component being formed on a metallic mold surface upon which said fine lined pattern negative was defined by electrical discharge machining.

10. A component as defined by Claim 9, the finely lined pattern of which is a reticle or a diffraction pattern.

FIG.1

FIG.2

FIG 3

FIG 4

FIG 5

FIG 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 217 188  (AG FÜR INDUSTRIELLE ELEKTRONIK AGIE) <br> * abstract; claim 1 * | 1 | B 23 H    1/00 <br> B 25 H    1/04 <br> G 02 B   21/34 |
| Y | | 2,9 | |
| Y | US-A-4 409 457  (TAKAHASHI et al.) <br> * abstract; claims 1-3; figures 1,2 * | 2 | |
| A | | 6 | |
| Y | PATENT ABSTRACTS OF JAPAN vol. 8, no. 65 (P-263)(1502), 27 March 1984; & JP - A - 58211658 (NAIGAI KASEI K.K.) 09.12.1983 | 9 | |
| A | idem | 10 | |
| A | DE-A-2 807 443  (PETZ ELEKTRO) <br> * whole document * | 1,2 | |
| A | EP-A-0 034 008  (MINNESOTA MINING & MANUFACTURING) <br> * abstract; claims 1,4,8 * | 3 | |
| A | PATENT ABSTRACTS OF JAPAN vol. 3, no. 112 (M-73), 18 September 1979; & JP - A - 54086896 (INOVE JAPAX KENKYUSHO) 07.10.1979 | 3 | **TECHNICAL FIELDS SEARCHED (Int. Cl.5)** <br><br> B 23 H <br> G 02 B <br> G 01 N <br> G 06 M |
| A | PATENT ABSTRACTS OF JAPAN vol. 8, no. 244 (M-337)(1681), 9 November 1984; & JP - A - 59123629 (CANON K.K.) 17.07.1984 | 4 | |
| A | GB-A-2 163 866  (FARMITALIA CARLO ERBA) <br> * abstract; claims 1,5 * <br> ---       -/- | 5 | |

The present search report has been drawn up for all claims

| Place of search | Date of completion of the search | Examiner |
|---|---|---|
| BERLIN | 06-05-1992 | HYLLA W R |

EPO FORM 1503 03.82 (P0401)

---

EUROPEAN SEARCH REPORT

European Patent Office

Application Number

EP 92 20 0814

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 640 398 (NCR CORPORATION) * page 6, paragraphs 2,3; figure 3; claims 1,13-17 * | 6,10 | |
| A | CA-A-1 154 614 (BERIAULT) * claims 3,7; figures 2,3 * | 9,10 | |
| A | EP-A-0 210 071 (ICI SCIENTIFIC) * abstract; figure 1; page 10, lines 9-16; page 11, lines 3-6; claims 1,3 * | 6 | |
| A | US-A-4 190 314 (S. GOLDSMITH) * abstract; figures 1-4; column 3, lines 10-44; claim 1 * | 6 | |
| A | US-A-4 299 441 (J.E. PARKER) * abstract; column 1, lines 5-10; column 3, lines 9-22,58-68; column 4, lines 39-50; figures 1-4 * | 6 | |

TECHNICAL FIELDS SEARCHED (Int. Cl.5)

The present search report has been drawn up for all claims

| Place of search | Date of completion of the search | Examiner |
|---|---|---|
| BERLIN | 06-05-1992 | HYLLA W R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)